# EUROPEAN PATENT SPECIFICATION

(11) **EP 0 613 080 B1**
(45) Date of publication and mention of the grant of the patent: **13.09.2000**
(21) Application number: 94300776.5
(22) Date of filing: 02.02.1994
(51) Int. Cl.: G06F 3/033

(54) **Graphical user interface incorporating a panning workspace with means for affixing windows**
Benutzerschnittstelle mit einem verschiebbaren Arbeitsraum und im Arbeitsraum fixierbaren Fenstern
Interface utilisateur graphique comprenant un espace de travail décalable et des fenêtres ancrables

(30) Priority: 24.02.1993 US 21872
(43) Date of publication of application: 31.08.1994
(73) Proprietor: SONY ELECTRONICS INC., Park Ridge, New Jersey 07656 (US)
(72) Inventor: Duffy, Robert, Milpitas, California 95035 (US); Graham, Jon, San Jose, California 95130 (US)
(74) Representative: Ayers, Martyn Lewis Stanley

(56) References cited:
- IBM TECHNICAL DISCLOSURE BULLETIN, vol. 35, no. 6, November 1992 NEW YORK US, pages 304-305, XP 000314151 'VARIABLE DISTANCE PANNING'
- IBM TECHNICAL DISCLOSURE BULLETIN, vol. 33, no. 11, April 1991 NEW YORK US, pages 78-81, XP 000110321 'INTUITIVE DESKTOP INCLUDING NAVIGATION THROUGH A COMPLEX GRAPHICAL STRUCTURE'

## Description

The present invention relates to apparatus and methods for displaying graphic information, and more particularly, the present invention relates to a computer controlled display system for displaying and manipulating overlapping windows of data on a desktop workspace.

Over the past decade, a variety of graphic user interfaces have been developed to ease human interaction with computer systems. Many display systems utilize metaphors in the design of the interface as a way of maximising human familiarity, and conveying information between the user and the computer. It is common for computer systems incorporating so-called "object oriented" display systems to utilize multiple "windows" on a display in which combinations of text and graphics are disposed. The display systems utilize familiar metaphors, such as desktops, control panels, notebooks and the like, such that the interface takes advantage of existing human mental structures to permit a user to draw upon the metaphor analogy to understand the requirements of the particular computer system.

It is well know that designing around a familiar metaphor helps reduce human learning time. (See for example, Patrick Chan, "Learning Considerations in User Interface Design: The Room Model", Report CS-84-16, University of Waterloo Computer Science Department, Onatario, Canada, July 1984, and the references cited therein.) The ability to operate on images or objects which relate the user to actual objects on, for example, a desktop, results in a stronger man-machine interface. (See for example, D.Robson, "Object Oriented Software Systems", BYTE, August 1991, page 74, Vol.6, No.8; L.Tesler, "The Smalltalk Environment", BYTE, August 1981, page 90, Vol.6, No.8; and Smith, et al., "Star User Interface: An Overview", National Computer Conference, 1982).

Research in interface design using metaphors in man-machine interfaces may be applied to computer controlled editing systems to incorporate and integrate various production media resources, such as special effects, music, graphics and the like. In the case of an editing system, a variety of resources must be integrated, scheduled and coordinated with one another to obtain a complete multi-media product. Users of computer controlled editing systems are generally familiar with the individual resources and the coordination of those resources to develop a finished product. Accordingly, the "windows" utilized in a video editing system may be designed such that the metaphor of the interface takes advantage of the knowledge of the user in operating discrete devices (for example, a video tape recorder or music synthesizer). The window may, therefore, take the form of a control panel for the video tape recorder, which includes the controls of play, reverse, record and the like. Similarly, the window may provide an area on the display screen in which movies, takes, or particular scenes are displayed for the user to edit.

One problem associated with many object-oriented graphic user interfaces, is that the display screen provides only a limited size workspace in which to operate on the windows. For example, in the case of a video editing workstation, windows corresponding to resource such as video tape recorders, music synthesizers, audio tape recorders and music mixers may be opened and operating concurrently on the display. Given the limited space of the display screen, the workspace (known as the "desktop") which is available to the user may become cluttered and confusing to operate. The user may be required to frequently move windows in the workspace to make room for other windows to be opened, or alter the priority in which the windows are displayed and overlap one another to gain access to a desired window.

The idea that the usable area of the desktop as represented in the computer memory may be larger than the actual area of the desktop which is displayed at any one time is known; and systems which implement it utilise a panning facility to enable the user to pan the current viewable area across the extent of the virtual desktop. An example of such a system, corresponding to the pre-characterising part of claim 1, is described in IBM Technical Disclosure Bulletin, vol.35, no.6, November 1992, New York, US, pages 304-305, XP 000314151 'Variable Distance Panning'.

As will be described, the present invention provides a method and apparatus for increasing the usable workspace area in a window-based graphic user interface. The present invention provides a real and a virtual desktop comprising the entire workspace, and the ability of the user to pan horizontally across the entire area in a contiguous fashion.

According to the present invention, there is provided a computer display system including a central processing unit (CPU) coupled to a display having a display screen, such that data is displayed on said display screen in a plurality of windows, comprising:
user interface generation means coupled to said CPU for displaying said data in said windows, said user interface generation means generating and displaying a user interface including a desktop having a visible portion and a virtual portion, wherein said visible portion corresponds to that portion of the said desktop currently visible on said display screen, said virtual portion corresponding to that portion of said desktop currently not visible to said user on said display screen;
panning means coupled to said CPU for selectively panning said desktop in at Least two directions, such that said desktop pans in a direction selected by a user, and that portion of said desktop within said visible portion is displayed to said user; characterised in that said windows displayed on said desktop include attachment means for selectively affixing at least one of said windows to said desktop, such that if a window is affixed to said desktop said window moves with said desktop in the direction said desktop is panned, and remains stationary relative to said desktop.

The present invention provides apparatus and methods for use in computer display systems, and in particular, display systems having object-oriented graphic user interfaces with overlapping windows. A display system including at least one central processing unit (CPU) is coupled through appropriate input/output (I/O) circuitry to input devices, such as a cursor control device. The CPU is further coupled to a hard disk drive for the storage of programs and data, and is coupled to a network through which the CPU may communicate with a variety of system resources such as editors, music synthesizers, graphic generators, and the like. The CPU is also coupled to a display device on which the present invention's users interface is displayed. Utilizing the teachings of the present invention, a "real" and a "virtual" workspace is defined comprising the entire desktop available to the user. The real workspace constitutes that portion of the desktop visible to the user on the display at any one time. The virtual workspace comprises a predefined extension of the screen area of the display which is also available for use by the user. The virtual workspace constitutes that portion of the desktop which is not visible to the user at any one time. The real and virtual workspaces comprise the entire desktop available to the user for opening and manipulating windows in the display system. In addition, windows may be selectively affixed to the desktop. Using the cursor control device, a user may pan horizontally over the desktop (both real and virtual). If a window has been affixed to the desktop, the window maintains it position relative to the desk top, and appears to move relative to the user. If the window is not affixed to the desktop, it appears to "float" above the desktop and remains fixed relative to the user as the desktop is panned.

The invention will be further described by way of non-limitative example with reference to the accompanying drawings, in which:-
Figure 1 is a functional block diagram illustrating one possible computer display system incorporating the teachings of the present invention.
Figure 2 shows a representative display screen illustrating the virtual and real workspace comprising the desktop of the present invention.
Figure 3 illustrates the graphic user interface of the present invention in which a system setup window has been opened and the window activation button is in the "UP" position.
Figure 4 illustrates a horizontal panning of the desktop wherein the system setup window maintains a fixed position relative to the user and floats above the desktop.
Figure 5 illustrates the graphic user interface of the present invention wherein the system set up window activation button is down ("DN") and the audio mix activation button is "UP".
Figure 6 illustrates the horizontal panning of the present invention wherein the system setup window has panned horizontally into the virtual workspace, with the desktop and the audio mix window remains in a fixed position relative to the user.
Figure 7 illustrates panning left in the system illustrated in Figure 6.
Figure 8 illustrates the continued left panning of the system illustrated in Figure 7.
Figure 9 illustrates the present invention wherein three overlapping windows have been opened.
Figure 10 illustrates the left panning of the system illustrated in Figure 9.
Figure 11 conceptually illustrates the operation of the present invention panning left and right, and moving windows between the real and virtual workspace on the desktop.

The detailed descriptions which follow are presented largely in terms of display images, algorithms and symbolic representations of operations of data bits within a computer memory. These algorithmic descriptions and representations are the means used by those skilled in the data processing arts to most effectively convey the substance of their work to others skilled in the art.

An algorithm is here, and generally, conceived to be a self consistent sequence of steps leading to a desired result. These steps are those requiring physical manipulations of physical quantities. Usually, though not necessarily, these quantities take the form of electrical or magnetic signals capable of being stored, transferred, combined, compared, and otherwise manipulated. It proves convenient at times, principally for reasons of common usage, to refer to these signals as bits, values, elements, symbols, characters, images, terms, numbers or the like. It should be borne in mind, however, that all of these and similar terms are to be associated with the appropriate physical quantities and are merely convenient labels provided to these quantities.

In the present case, the operations are machine operations performed in conjunction with a human operator. Useful machines for performing the operations of the present invention include general purpose digital computers or other similar devices. In all cases, there should be borne in mind the distinction between the method operations of operating a computer and the method of computation itself.

The present invention relates to method steps for operating a computer and processing electrical or other physical signals to generate other desired physical signals. The present invention also relates to apparatus for performing these operations. This apparatus may be specially constructed for the required purposes, or it may comprise a general purpose computer selectively activated or reconfigured by a computer program stored in the computer. The algorithms, methods and apparatus presented herein are not inherently related to any particular computer. In particular, various general purpose machines may be used with programs in accordance with the teachings herein, or it may prove more convenient to construct more specialised apparatus to perform the required method steps. The required structure for a variety of these machines will appear from the description given below. Machines which may perform the functions of the present invention include those manufactured by Sony Corporation of America, as well s other manufacturers of computer systems.

The present invention discloses apparatus and methods for displaying graphic or other information in a window-based system on a computer display. In the following description, numerous specific details are set forth such as computer system configurations, window elements, icons, desktop sizes, metaphors, window configurations and arrangements, etc. in order to provide a thorough understanding of the present invention. However, it will be apparent to one skilled in the art that the present invention may be practised without these specific details. In other instances, well known circuits, structures and the like are not described in detail so as not to obscure the present invention unnecessarily.

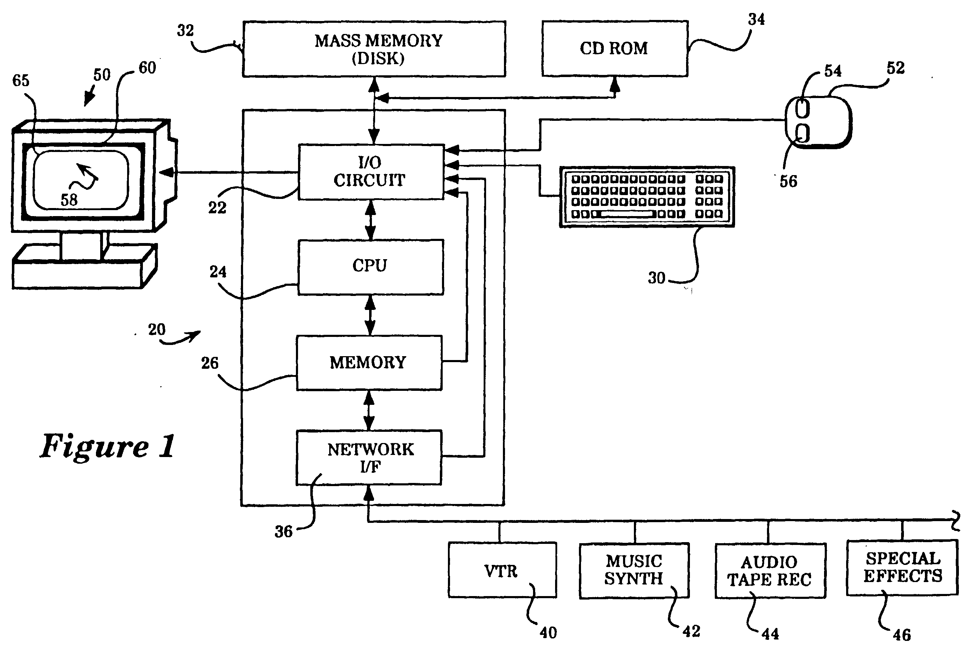

Referring now to Figure 1, the hardware configuration of the present invention is conceptually illustrated. The Figure illustrates a computer system for generating a window-based graphic user interface in accordance with the teachings of the present invention. As illustrated, the computer system includes a computer 20 which comprises four major components. The first of these is an input/output (I/O) circuit 22, which is used to communicate information in appropriately structured form to and from other portions of the computer 20. In addition, computer 20 includes a central processing unit (CPU) 24 coupled to the I/O circuit 22 and to a memory 26. These elements are those typically found in most computers and, in fact, computer 20 is intended to be representative of a broad category of data processing devices.

Also shown in Figure 1 is a keyboard 30 for inputting data and commands into computer 20 through the I/O circuit 22, as is well known.

Similarly, a CD ROM 34 is coupled to the I/O circuit 22 for providing additional programming capacity to the system illustrated in Figure 1. It will be appreciated that additional devices may be coupled to the computer 20 for storing data, such as magnetic tape drives, buffer memory devices, and the like. A network interface 36 is coupled to both the memory 26 and the I/O circuit 22, to permit the computer 20 to communicate along a network 38 which is coupled to other system resources. For example, in a video editing environment, the computer 20 may be coupled over the network 38 to a video tape recorder 40, a music synthesizer 42, an audio tape recorder 44, and, special effects resource 46, as shown.

A display monitor 50 is coupled to the computer 20 through the I/O circuit 22. Any well know variety of cathode ray tube (CRT), liquid crystal or other displays may be utilized as display 50. A cursor control device 52 includes switches 54 and 56 for signalling the CPU 24 in accordance with the teachings of the present invention. Cursor control device 52 (commonly referred to as a "mouse") permits a user to select various command modes, modify graphic data, and input other data utilizing switches 56 and 54. More particularly, the cursor control device 52 permits a user to selectively position a cursor 58 at any desired location on a display screen 60 of the display 50. As illustrated in Figure 1, the cursor 58 is disposed with a window 65 in the present invention's graphic user interface, to be described more fully below. Moreover, in the presently preferred embodiment, the present invention's window-based user interface is generated and displayed using software stored in either memories 26,32 or CD ROM 34, and executed by the CPU 24.

In the presently preferred embodiment, cursor control 52 utilizes well known apparatus and methods for signalling CPU 24 of positional changes or cursor 58 by movement of the cursor control over a surface. However, it will be appreciated by one skilled in the art that a variety of well known cursor control devices may be utilized by the present invention, including other control devices such as mechanical mice, trackballs, joy sticks, graphic tablets, other keyboard inputs and the like. The cursor control 52 in Figure 1 is intended to encompass all such equivalent devices. For convenience in this specification, the cursor control device 52 and the equivalents thereof, are collectively referred to a "mouse".

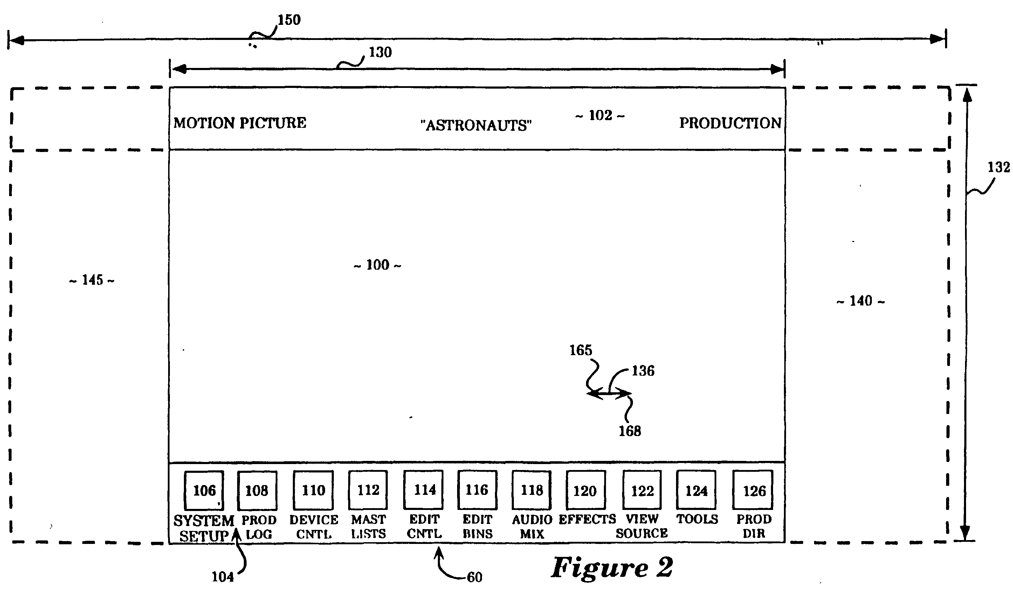

Referring now to Figure 2, the display screen 60 of the display 50 is shown in additional detail. Illustrated within the display 60, is a graphic user interface which includes a working area 100, a title bar 102 and a function bar 104, as illustrated. The function bar 104 includes a plurality of button functions which may be selected by the user, including a system setup function 106, a production log 108, a device controller 110, mast lists 112, edit control 114, edit bins 116, an audio mixer 188, special effects 120, a view source function 122, tool functions 124 and a production directory 126. It will be appreciated by one skilled in the art, that the functions illustrated in Figure 2 are representative of a broad category of functions which may be utilized by the present invention. For example, although the present invention is illustrated with reference to a video edit graphic user interface, it will be appreciated that numerous functions may be applicable for use in conjunction with the present invention in other systems beyond that of video editing.

The working area 100 comprises the "real" workspace of the display screen 60 which is visible to the user. The working area 100 is defined by a length 130 and width 132. For purposes of this specification, the working area 100 comprises the real desktop space in which the user may operate on the functions selected from the function bar 104. Additionally, as shown, a cursor 136 is provided which is controlled by using cursor control device 52, as previously described with respect to Figure 1, and discussed more fully below.

Utilizing the teachings of the present invention, a "virtual" workspace is also defined which includes areas 140 and 145 in Figure 2. The "desktop" available to a user comprises the combined length of the real and virtual working areas and is defined by length 150 and the width 132, as shown in Figure 2. Accordingly, the total workspace available in the desktop metaphor to the user of the present invention is the combined areas 100, 140 and 145. However, since the desktop of the present invention may be horizontally panned, the virtual and real workspaces dynamically change. Therefore, for purposes of this specification, the real workspace constitutes that portion of the desktop visible to the user, and the virtual workspace constitutes that portion of the desktop which is not visible to the user at any one time. Although not visible to the user, for purposes of explanation in this specification, the virtual workspace is illustrated using dashed lines in the figures. It will be noted that although Figure 2 illustrates the present invention increasing the length of the available workspace but not the width, that other embodiments of the present invention may increase both the vertical and horizontal lengths and widths of the total workspace.

Referring once again to Figure 2, as shown, cursor 136 includes a left arrowhead 165 and a right arrowhead 168. As will be described, the workspace comprising the virtual workspaces 140 and 145 and real workspace 100, may be panned left or right by depressing an appropriate switch 54 or 56 on the cursor control device 52. The depression of left switch 56 results in the workspace being panned horizontally to the left and in the direction of the arrowhead 165. Similarly, the depression of switch 54 results in the workspace panning right in the direction of arrowhead 168, as will be illustrated. A button function such as system setup 106 may be selected by placing cursor 136 over a portion of the function on the function bar 104 and momentarily clicking either switch 54 or 56 on the cursor control device 52. In the presently preferred embodiment, the movement of the cursor 136 over the function bar 104 results in a modification of the visual appearance of the cursor to that of a single arrow. (See cursor 58 in Figure 1). Subsequent to the selection of a function on the function bar 104, the movement of the cursor 136 into the working area 100, results in the modification of the visual appearance of the cursor once again, such that the cursor 136 appears as shown in Figure 2.

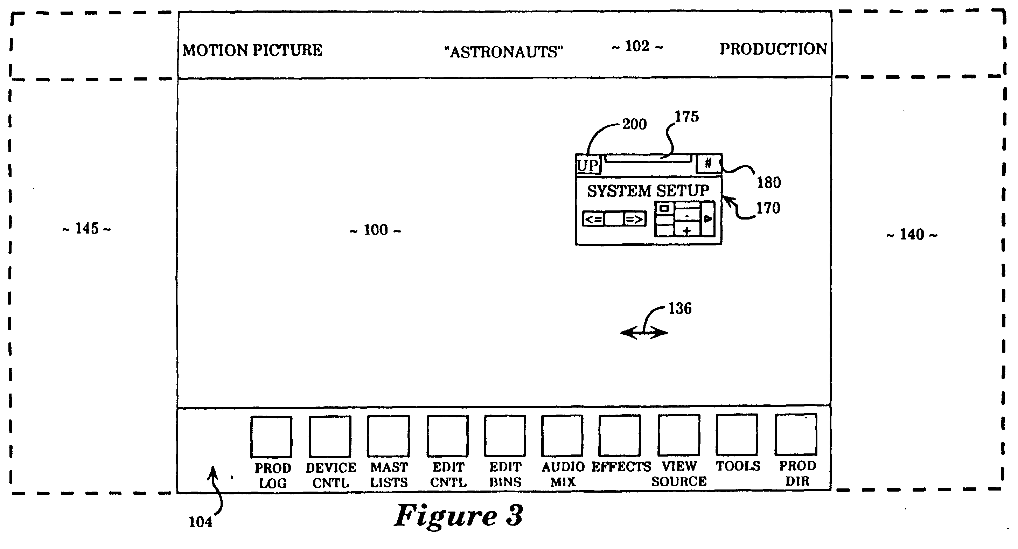

Referring now to Figure 3, the button function system setup 106 has been selected by a user. System setup window 170 includes a drag bar 175 for selectively moving the window 170 over the working area 100. In operation, the cursor 136 is placed over a portion of bar 175, and a switch (either switch 54 or 56) on cursor control device 52 is depressed. The window 170 may then be selectively dragged to any location within the working area 100 and positioned for the convenience of the user. As shown, window 170 further includes a close box 180 which may be activated to close window 170 and redisplay the button function on the function bar 104. The window 170 may be closed by placing the cursor 136 over a portion of box 180 and momentarily depressing ("clicking") a switch on cursor control device 52.

As illustrated in Figure 3, the activation of any one of the functions identified and displayed along the function bar 104 results in the opening of a corresponding window (in the example illustrated in Figure 3, window 170). It will be appreciated by one skilled in the art that the functions illustrated in Figure 3 and disposed in the function bar 104 are examples of the type of functions which may be utilized using the teachings of the present invention. Depending on the particular application in which the graphic user interface of the present invention is used, numerous other functions may be displayed along the function bar 104. Additionally, as illustrated in Figure 3, and the remaining figures in this specification, each of the windows (for example window 170) corresponding to the functions displayed along function bar 104 have unique characteristics. Depending on the function which is selected, the window may comprise the control panel of the video editing device, such as an audio mixer, video tape recorder or the like, or may include areas in which text, graphics, or moves (such as for example, various scenes and takes) are displayed. Accordingly, it will be appreciated that the functions illustrated in the figures are for illustration only, and that in particular window characteristics shown are not to be considered limitations on the present invention.

Referring again to Figure 3, window 170 includes a floating window activation button 200. As illustrated in Figure 3, the button 200 in the presently preferred embodiment, includes the notation "UP" (or alternatively down "DN"). As will be described, the present invention permits a user to selectively set each opened window on the desktop (comprising both the real area 100 and virtual areas 145 and 140) to either float above the desktop, or appear to the user to be affixed to the desktop. In the present embodiment, upon selecting a function along the function bar 104, each window is opened (for example window 170) with the floating window activation button 200 selected by default in the "UP" (not affixed) configuration.

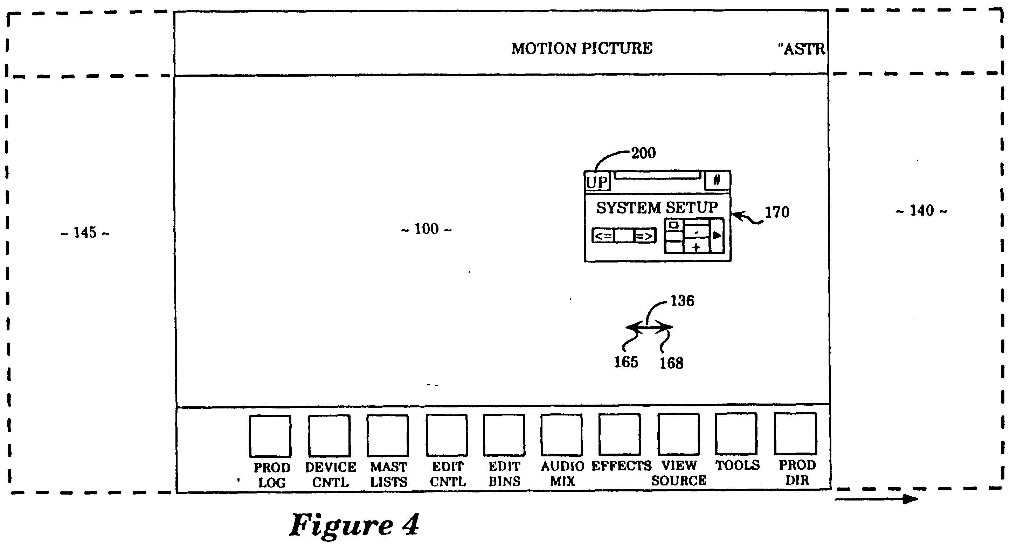

Referring now to Figure 4, the operation of the present invention will be described when the floating window activation button 200 is in the "UP" (not affixed) position for window 170. As illustrated, window 170 "floats" above the desktop comprising the real working area 100 and virtual areas 145 and 140. The window 170 floats above the desktop such that it remains in the same relative position as viewed by the user regardless of which direction the desktop is panned. In the example illustrated, switch 54 has been depressed by the user, such that the desktop has panned to the right in the direction of arrowhead 168. As shown, although the desktop has panned to the right, the window 170 remains stationary with respect to the user.

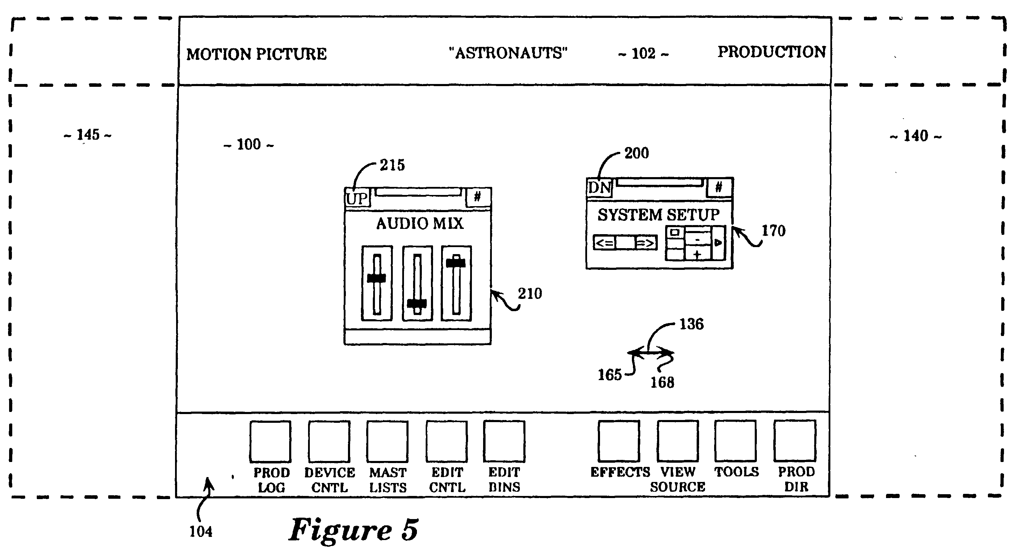

Referring now to Figure 5, window 170 is illustrated with the floating window activation button 200 in the down ("DN") position. In addition, the audio mix button function has been activated by a user, resulting in the display of the audio mix window 210. As shown, window 210 includes a floating window activation button 215 which is in the "UP" position, and thereby results in the window 210 floating above the working area 100 in a position fixed relative to the user.

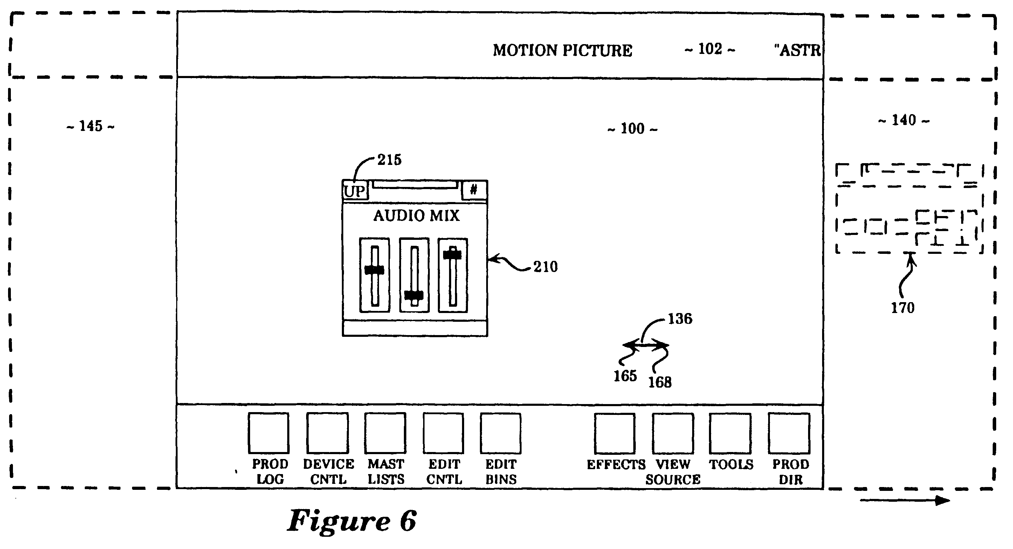

Assume for the sake of example that the user desires to pan the desktop illustrated in Figure 5 to the right. In accordance with the teachings of the present invention, the user depresses switch 54 on the cursor control device 52, thereby panning the desktop to the right as viewed by the user (in the direction of arrow 168). As shown in Figure 6, panning the desktop to the right in the direction of arrow 168, results in the window 170 being obscured from view as it passes out of area 100 and into the virtual desktop 140 (shown for illustration in dashed lines). As previously described with reference to Figure 5, activation button 200 of the window 170 was selected by the user to be in the down ("DN") position, and accordingly, the window 170 moves relative to the user as if it is affixed to the desktop. As such, the window 170 pans with the desktop, whether to the right or to the left, as the desktop is panned by the user using the cursor control device 52. However, as shown in Figure 6, audio mix window 210 remains stationary in space relative to the user, such that it appears to "float" over the desktop. Since window 210 floats over the desktop, it does not move relative to the user as the desktop is panned right or left. Additionally, it will be again noted that although window 170 is shown in Figure 6 in dashed lines, that the dashed lines are for illustration only, and that the present embodiment, those items illustrated in the figures in dashed lines are not visible to the user, since they fall outside of the real working area 100 of the desktop which comprises the screen 60.

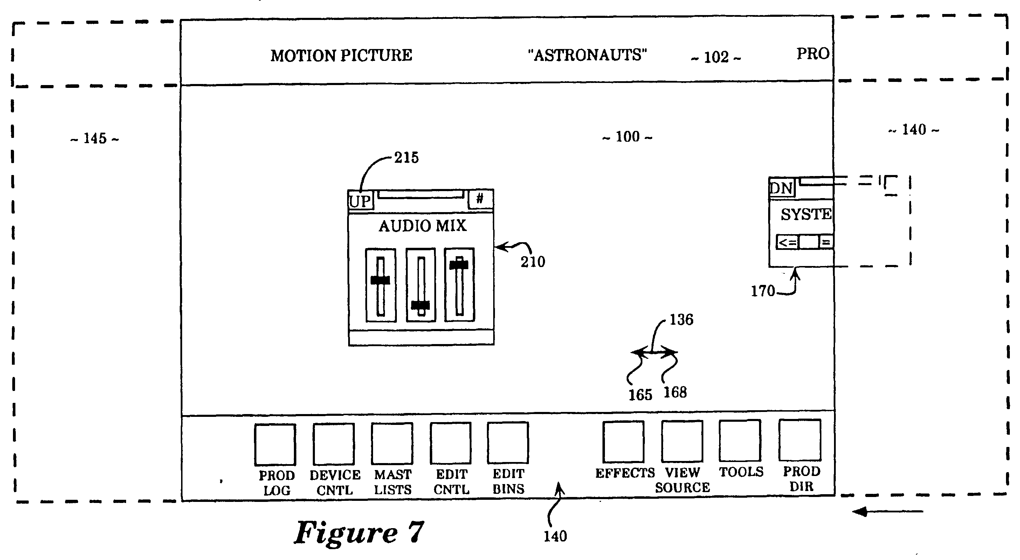

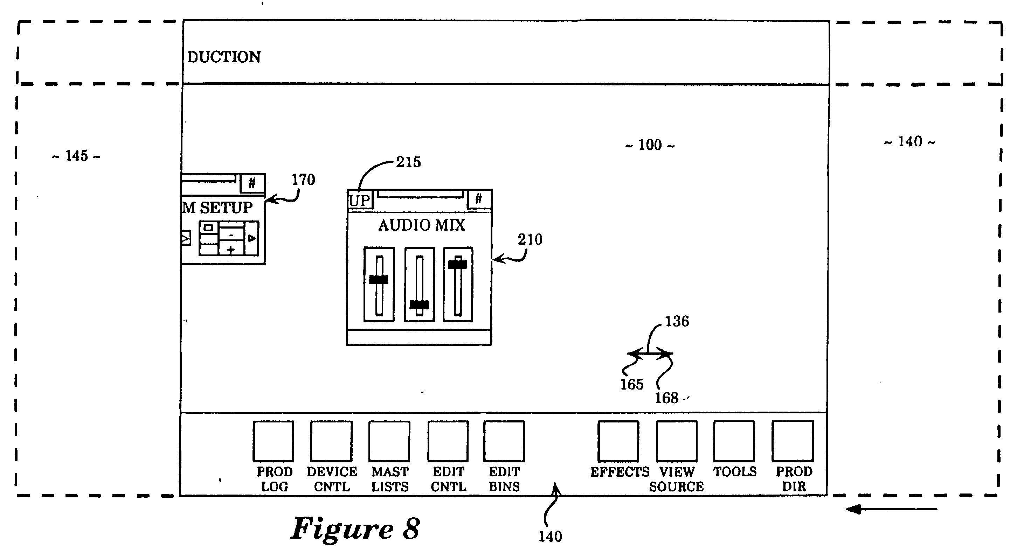

Referring now to Figure 7, subsequent to the panning right illustrated in Figure 6, Figure 7 shows the panning left of the desktop by the user. In the present embodiment, the user depresses switch 56 on cursor control device 52 to initiate panning left (in direction of arrow 165 on cursor 136). As illustrated in Figure 7, window 210 remains stationary in space and floats over the desktop as a result of activation button 215 being in an "UP" position. However, as illustrated in Figure 7, window 170 has moved such tat it is partially visible in the real working area 100 as the desktop is panned left by the user. As illustrated in Figure 8, continuing to pan the desktop left in the direction of arrow 165 results in the window 170 appearing to traverse the real working area 100, and moving partially into the virtual desktop area 145 as the desktop is panned.

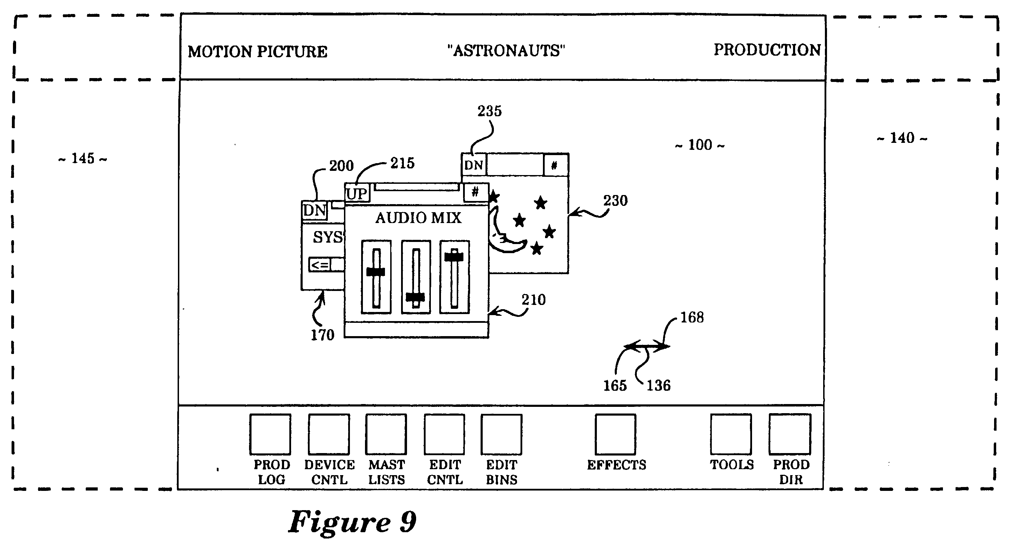

Referring now to Figure 9, there is shown an example of the present invention in which three windows are simultaneously open and active. There is shown window 210 in which floating window activation button 215 is in an "UP" position, and window 170 in which the activation button 200 has been selected to be in a down ("DN") position. In addition, a window 230 has been opened in which the activation button 235 has been selected by the user to be in a down ("DN") position, thereby affixing it to the desktop. It should be noted that since window 210 floats above the desktop, that it appears to be "closer" to the user and thereby overlays windows which have been affixed to the desktop by being placed in a down ("DN") position (in the present example, windows 170 and 230).

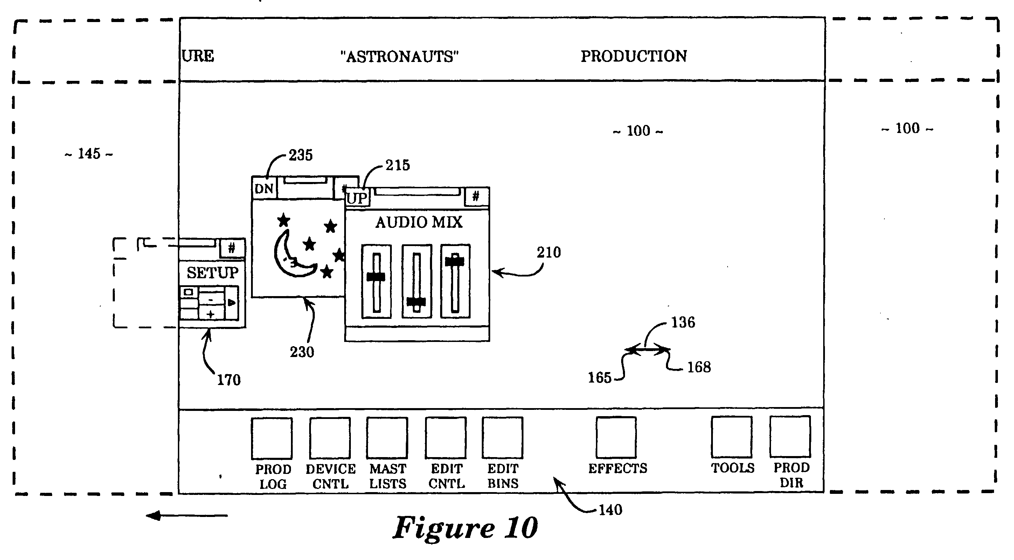

Assume for the sake of example that a user desires to pan the desktop of the present invention to the left (in the direction of arrow 165). The user depresses switch 56 on cursor control device 52 and the desktop pans to the left relative to the user facing the display. As illustrated in Figure 10, window 210 remains stationary in space relative to the user since the function 215 is in the UP (floating) position. Also illustrated in Figure 10 is the movement of windows 230 and 170 relative to the user as the desktop pans left. As shown, window 170 is only partially visible, with a portion of window 170 having entered the virtual workspace 145. Similarly, as shown in Figure 10, window 230 has passed behind the window 210 and is partially obscured by window 210.

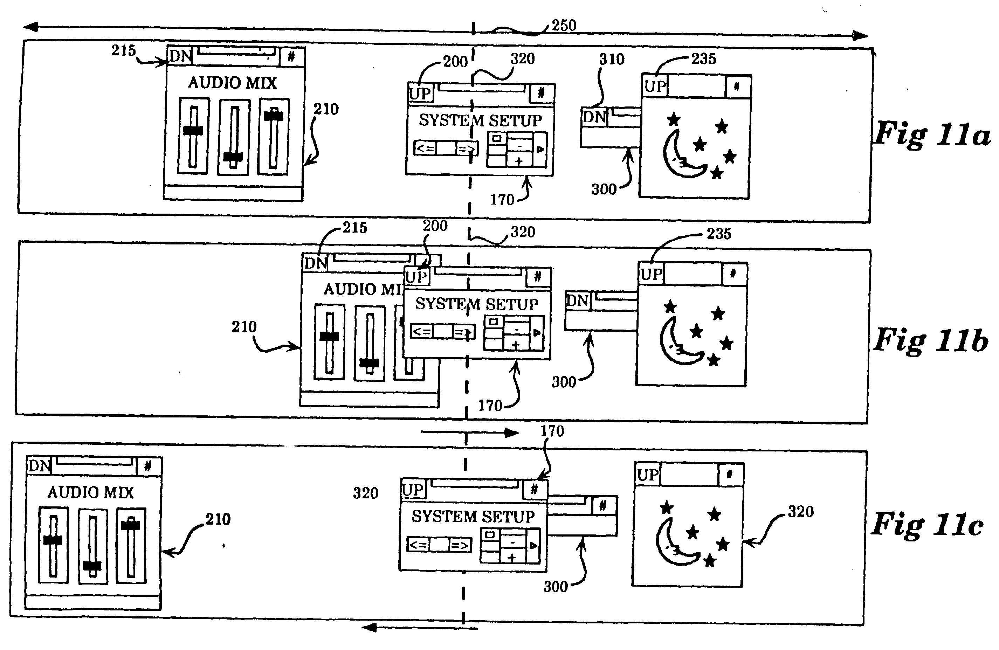

Referring to Figures 11a-11c, the operation of the present invention is conceptually illustrated to assist the reader in understanding the present invention's overall function and utility. As previously described, the desktop of the present invention includes the real working area 100 (real workspace) and virtual areas 140 and 145 (virtual workspace). Thus, the entire desktop comprising the graphic user interface of the present invention includes areas 100, 140 and 145 having an overall length identified in figure 11 as length 250. Assume for the sake of example that window 170 is set such that the floating window activation button function 200 is in an UP (floating) position. In addition, assume for the sake of example that window 210 has been selected such that the activation button 2315 is in the down ("DN") position. As illustrated in Figure 11, window 230 is provided in which the activation button 235 has been selected by the user to be in the UP position. An additional window 300 is illustrated in which its activation button 310 is in down ("DN") position. A centre line 320 conceptually represents the centre line of the real working area 100, comprising display screen 60 as viewed by the user.

As illustrated in Figure 11b, panning the desktop to the right results in the system window maintaining its position relative to the centre line 320 and the user since the floating window activation function button 200 is in an UP (unaffixed) position. Similarly, window 230 remains fixed relative to the user since its activation button 235 is in an UP position as well. During the panning of the desktop to the right, window 210 moves with the desktop as a result of activation button 215 being in a down (affixed) position, as does window 300 as illustrated in Figure 11b.

Referring now to Figure 11c, panning to the left is shown in which windows 170 and 230 maintain their same relative position to the user and float above the desktop. Windows 210 and 300 being "affixed" to the desktop move with the desktop to the left, as shown in Figure 11c.

Accordingly, the present invention as described provides an improved graphic user interface for use in a window-based display system. While the present invention has been described with reference to Figures 1 through 11, it will be appreciated that the figures are for illustration only, and do not limit the spirit and scope of the invention. For example, all of the figures may have, by necessity, used example windows having certain attributes and/or functions, it will be appreciated that the invention is not limited by the specific examples provided.

In addition, although the present invention has been described with respect to panning only to the left or right, it will be appreciated by one skilled in the art that vertical panning using the teachings of the present invention may also be provided. Moreover, it will be noted that the present invention may be realized using a variety of computer programming languages and hardware, and is not limited to any particular hardware or software. In as much as the various features and aspects of the present invention are not static events, and are perceived by the user as having motion, the reader is referred to a video tape entitled "Graphical User Interface Incorporating A Horizontal Panning Workspace" submitted by the applicant concurrent with the filing of the application on which this patent is based.

## Claims

1. A computer display system including a central processing unit (CPU) (24) coupled to a display (50) having a display screen (60), such that data is displayed on said display screen in a plurality of windows, comprising:
user interface generation means coupled to said CPU for displaying said data in said windows, said user interface generation means generating and displaying a user interface including a desktop having a visible portion (100) and a virtual portion (140,145), wherein said visible portion (100) corresponds to that portion of the said desktop currently visible on said display screen (60), said virtual portion corresponding to that portion of said desktop currently not visible to said user on said display screen;
panning means (52,30) coupled to said CPU for selectively panning said desktop in at least two directions, such that said desktop pans in a direction selected by a user, and that portion of said desktop within said visible portion is displayed to said user; characterised in that said windows displayed on said desktop include attachment means (200) for selectively affixing at least one of said windows (170) to said desktop, such that if a window (170) is affixed to said desktop said window (170) moves with said desktop in the direction said desktop is panned, and remains stationary relative to said desktop.

2. The computer display system as defined by claim 1, wherein in the event said window (170) is not affixed to said desktop, said window remains stationary with respect to said user, such that said unaffixed window appears to said user to float above said desktop as said desktop is panned.

3. The computer display system as defined by claim 2, wherein said panning means includes a cursor control device (52) coupled to said CPU and operable by said user.

4. The computer display system as defined by claim 2 or 3, wherein said attachment means (200) includes a floating window activation button in each of said windows (170) displayed on said display having two states, a first state corresponding to an affixed state and a second state corresponding to said unaffixed state.

5. The computer display system as defined by claim 4, wherein said activation button (200) displays the notation DN if said function has been placed in said affixed state.

6. The computer display system as defined by claim 5, wherein said activation button (200) displays the notation UP if said function has been placed in said unaffixed state.

7. The computer display system as defined by any one of claims 2 to 4, further including a function bar (104) on said display screen on which is displayed a plurality of functions selectable by said user.

8. The computer display system as defined by Claim 7, wherein said function bar (104) is horizontally disposed along the lower portion of said display screen.

9. The computer display system as defined by claim 8, further including a title bar (102) disposed horizontally across the top of said display screen.

10. The computer display system defined by claim 9, wherein said function bar (104) remains stationary relative to said user.

11. The computer display system as defined by claim 9, wherein said title bar pans with said desktop.

12. The computer display system as defined by any one of claims 2 to 11, wherein in the event said windows overlay one another on said desktop, windows (170) unaffixed to said desktop appear to said user to float above windows (210) which are affixed to said desktop.

13. The computer display system as defined by claim 12, wherein said panning is horizontal.

14. The computer display system as defined by claim 3, wherein said desktop further includes a cursor (136) displayed on said display screen and controlled by said cursor control device (52), said cursor having the shape of an arrow including a body and two opposing arrow heads, one (165) of said arrow heads pointing left and one arrow head (168) pointing right with respect to said user viewing said display, said arrow heads corresponding to panning directions of said desktop.

15. The computer display system as defined by claim 14, wherein said cursor control device includes at least two switches (54,56) coupled to said CPU, said switches corresponding to said panning directions.

16. The computer display system as defined by claim 15, wherein if said cursor is placed by said user using said cursor control device over one of said windows displayed on said desktop, said CPU modifies the shape of said cursor.

17. The computer display system as defined by claim 16, wherein said modified cursor has the shape of an arrow having only a single arrow head.

18. A method for increasing the usable workspace for a user in a computer display system including a central processing unit (CPU) (24) coupled to a display (50) having a display screen (60), such that data is displayed on said display screen in a plurality of windows, comprising the steps of:
generating and displaying a user interface including a desktop having a visible portion (100) and a virtual portion (150,145), wherein said visible portion (100) corresponds to that portion of said desktop currently visible on said display screen, and virtual portion (140,145) corresponding to that portion of said desktop currently not visible to said user on said display screen;
panning said desktop in at least two directions, such that said desktop pans in a direction selected by a user, and that portion of said desktop within said visible portion is displayed to said user; and
selectively affixing at least one (170) of said windows to said desktop, such that if a window is affixed to said desktop said window (170) moves with said desktop in the direction said desktop is panned, and remains stationary relative to said desktop; characterised in that in the event said window (170) is not affixed to said desktop, said window remains stationary with respect to said user, such that said unaffixed window appears to said user to float above said desktop as said desktop is panned.

19. The method as defined by claim 18, wherein said user uses a cursor control device (52) coupled to said CPU and operable by said user to pan said desktop.

20. The method as defined by claim 18, wherein each of said windows includes a floating window activation button having two states, a first state corresponding to an affixed state and a second state corresponding to said unaffixed state.

21. The method as defined by claim 20, wherein said activation button displays the notation DN if said function has been placed in said affixed state.

22. The method as defined by claim 21, wherein said activation button displays the notation UP if said function has been placed in said unaffixed state.

23. The method as defined by claim 18 further including a function bar (104) on said computer display screen on which is displayed a plurality of functions selectable by said user.

24. The method as defined by claim 23, wherein said function bar (104) is horizontally disposed along the lower portion of said display screen.

25. The method as defined by claim 24 further including a title bar (102) disposed horizontally across the top of said computer display screen.

26. The method as defined by claim 25, wherein said function bar (104) remains stationary relative to said user.

27. The method as defined by claim 25, wherein said title bar pans with said desktop.

28. The method as defined by claim 18, wherein in the event said windows overlay one another on said desktop, windows (107) unaffixed to said desktop appear to said user to float above windows (200) which are affixed to said desktop.

29. The method as defined by claim 28, wherein said panning is horizontal.

30. The method as defined by claim 19, wherein said desktop further includes a cursor (136) displayed on said display screen and controlled by said cursor control device, said cursor having the shape of an arrow including a body and two opposing arrow heads, one (165) of said arrow heads pointing left and one arrow head (168) pointing right with respect to said user viewing said display, said arrow heads corresponding to panning directions of said desktop.

31. The method as defined by claim 30, wherein said cursor control device includes at least two switches (54,56) coupled to said CPU, said switches corresponding to said panning directions.

32. The method as defined by claim 31, wherein if said cursor is placed by said user using said cursor control device over one of said windows displayed on said desktop, said CPU modifies the shape of said cursor.

33. The method as defined by claim 32, wherein said modified cursor has the shape of an arrow having only a single arrow head.

## Patentansprüche

1. Computeranzeigesystem, aufweisend eine an eine Anzeige (50) mit einem Anzeigeschirm (60) gekoppelte zentrale Verarbeitungseinheit (CPU) (24), so dass Daten in mehreren Fenstern auf dem Anzeigeschirm angezeigt werden, mit:
Einer an die CPU gekoppelten Benutzerschnittstellen-Erzeugungseinrichtung zur Anzeige der Daten in den Fenstern, wobei die Benutzerschnittstellen-Erzeugungseinrichtung eine Benutzerschnittstelle erzeugt und anzeigt, die eine Tischfläche mit einem sichtbaren Abschnitt (100) und einem virtuellen Abschnitt (140, 145) aufweist, wobei der sichtbare Abschnitt (100) mit dem gegenwärtig auf dem Anzeigeschirm (60) sichtbaren Abschnitt der Tischfläche korrespondiert und der virtuelle Abschnitt mit dem gegenwärtig für den Benutzer nicht auf dem Anzeigeschirm sichtbaren Abschnitt der Tischfläche korrespondiert,
einer an die CPU gekoppelten Dreheinrichtung (52, 30) zur wahlweisen Drehung der Tischfläche in wenigstens zwei Richtungen, so dass sich die Tischfläche in einer vom Benutzer gewählten Richtung dreht und der sich im sichtbaren Abschnitt befindende Abschnitt der Tischfläche dem Benutzer angezeigt wird, dadurch gekennzeichnet, dass die auf der Tischfläche angezeigten Fenster eine Befestigungseinrichtung (200) zur Befestigung wenigstens eines (170) der Fenster an der Tischfläche derart aufweisen, dass sich bei Befestigung eines Fensters (170) an der Tischfläche dieses befestigte Fenster (170) mit der Tischfläche in der Richtung, in der die Tischfläche gedreht wird, bewegt und relativ zur Tischfläche stationär bleibt.

2. Computeranzeigesystem nach Anspruch 1, wobei in dem Fall, dass das Fenster (170) nicht an der Tischfläche befestigt ist, das Fenster in Bezug auf den Benutzer derart stationär bleibt, dass das unbefestigte Fenster bei Drehung der Tischfläche als über der Tischfläche schwebend erscheint.

3. Computeranzeigesystem nach Anspruch 2, wobei die Dreheinrichtung eine an die CPU gekoppelte und vom Benutzer betätigbare Cursorsteuerungseinrichtung (52) aufweist.

4. Computeranzeigesystem nach Anspruch 2 oder 3, wobei die Befestigungseinrichtung (200) in jeden der auf der Anzeige angezeigten Fenster (170) einen Fensterschwebe-Aktivierungsknopf enthält, der zwei Zustände aufweist, einen mit einem befestigten Zustand korrespondierenden ersten Zustand und einen mit einem unbefestigten Zustand korrespondierenden zweiten Zustand.

5. Computeranzeigesystem nach Anspruch 4, wobei der Aktivierungsknopf (200) die Notation DN anzeigt, wenn die Funktion in den befestigten Zustand gesetzt ist.

6. Computeranzeigesystem nach Anspruch 5, wobei der Aktivierungsknopf (200) die Notation UP anzeigt, wenn die Funktion in den unbefestigten Zustand gesetzt ist.

7. Computeranzeigesystem nach einem der Ansprüche 2 bis 4, mit einem Funktionsbalken (104) auf dem Anzeigeschirm, auf dem mehrere vom Benutzer wählbare Funktionen angezeigt sind.

8. Computeranzeigesystem nach Anspruch 7, wobei der Funktionsbalken (104) längs des unteren Abschnitts des Anzeigeschirms horizontal angeordnet ist.

9. Computeranzeigesystem nach Anspruch 8, mit einem Titelbalken (102), der horizontal über der Oberseite des Anzeigeschirms angeordnet ist.

10. Computeranzeigesystem nach Anspruch 9, wobei der Funktionsbalken (104) relativ zum Benutzer stationär bleibt.

11. Computeranzeigesystem nach Anspruch 9, wobei sich der Titelbalken (102) mit der Tischfläche dreht.

12. Computeranzeigesystem nach einem der Ansprüche 2 bis 11, wobei in dem Fall, dass die Fenster auf der Tischfläche einander überlagert sind, an der Tischfläche unbefestigte Fenster (170) dem Benutzer über an der Tischfläche befestigten Fenstern (210) schwebend erscheinen.

13. Computeranzeigesystem nach Anspruch 12, wobei die Drehung horizontal ist.

14. Computeranzeigesystem nach Anspruch 3, wobei die Tischfläche einen auf dem Anzeigeschirm angezeigten und von der Cursorsteuerungseinrichtung (52) gesteuerten Cursor (136) in Form eines Pfeils mit einem Körper und zwei entgegengesetzte Pfeilspitzen aufweist, wobei in Bezug auf einen die Anzeige betrachtenden Benutzer eine (165) der Pfeilspitzen nach links und eine Pfeilspitze (168) nach rechts zeigt, und wobei die Pfeilspitzen mit den Drehrichtungen der Tischfläche korrespondieren.

15. Computeranzeigesystem nach Anspruch 14, wobei die Cursorsteuerungseinrichtung (52) wenigstens zwei an die CPU gekoppelte Schalter (54, 56) aufweist, die mit den Drehrichtungen korrespondieren.

16. Computeranzeigesystem nach Anspruch 15, wobei bei einem Setzen des Cursors durch den die Cursorsteuerungseinrichtung verwendenden Benutzer auf eines der auf der Tischfläche angezeigte Fenster die CPU die Form des Cursors modifiziert.

17. Computeranzeigesystem nach Anspruch 16, wobei der modifizierte Cursor die Form eines Pfeils mit nur einer einzigen Pfeilspitze aufweist.

18. Verfahren zum Erweitern des gewöhnlichen Arbeitsraums für einen Benutzer in einem Computeranzeigesystem, das eine an eine Anzeige (50) mit einem Anzeigeschirm (60) gekoppelte zentrale Verarbeitungseinheit (CPU) (24) aufweist, so dass Daten in mehreren Fenstern auf dem Anzeigeschirm angezeigt werden, mit den Schritten:
Erzeugen und Anzeigen einer Benutzerschnittstelle, die eine Tischfläche mit einem sichtbaren Abschnitt (100) und einem virtuellen Abschnitt (140, 145) aufweist, wobei der sichtbare Abschnitt (100) mit dem gegenwärtig auf dem Anzeigeschirm (60) sichtbaren Abschnitt der Tischfläche korrespondiert und der virtuelle Abschnitt mit dem gegenwärtig für den Benutzer nicht auf dem Anzeigeschirm sichtbaren Abschnitt der Tischfläche korrespondiert,
Drehen der Tischfläche in wenigstens zwei Richtungen, so dass sich die Tischfläche in einer vom Benutzer gewählten Richtung dreht und der sich im sichtbaren Abschnitt befindende Abschnitt der Tischfläche dem Benutzer angezeigt wird, und
wahlweises Befestigen wenigstens eines (170) der Fenster an der Tischfläche derart, dass sich bei Befestigung eines Fensters (170) an der Tischfläche dieses befestigte Fenster (170) mit der Tischfläche in der Richtung, in der die Tischfläche gedreht wird, bewegt und relativ zur Tischfläche stationär bleibt, dadurch gekennzeichnet, dass in dem Fall, dass das Fenster (170) nicht an der Tischfläche befestigt ist, das Fenster in Bezug auf den Benutzer derart stationär bleibt, dass das unbefestigte Fenster bei Drehung der Tischfläche als über der Tischfläche schwebend erscheint.

19. Verfahren nach Anspruch 18, wobei der Benutzer zum Drehen der Tischfläche eine an die CPU gekoppelte und vom Benutzer betätigbare Cursorsteuerungseinrichtung (52) verwendet.

20. Verfahren nach Anspruch 18, wobei jedes der Fenster einen Fensterschwebe-Aktivierungsknopf enthält, der zwei Zustände aufweist, einen mit einem befestigten Zustand korrespondierenden ersten Zustand und einen mit einem unbefestigten Zustand korrespondierenden zweiten Zustand.

21. Verfahren nach Anspruch 20, wobei der Aktivierungsknopf die Notation DN anzeigt, wenn die Funktion in den befestigten Zustand gesetzt ist.

22. Verfahren nach Anspruch 21, wobei der Aktivierungsknopf die Notation UP anzeigt, wenn die Funktion in den unbefestigten Zustand gesetzt ist.

23. Verfahren nach Anspruch 18, mit einem Funktionsbalken (104) auf dem Computeranzeigeschirm, auf dem mehrere vom Benutzer wählbare Funktionen angezeigt sind.

24. Verfahren nach Anspruch 23, wobei der Funktionsbalken (104) längs des unteren Abschnitts des Anzeigeschirms horizontal angeordnet ist.

25. Verfahren nach Anspruch 24, mit einem Titelbalken (102), der horizontal über der Oberseite des Anzeigeschirms angeordnet ist.

26. Verfahren nach Anspruch 25, wobei der Funktionsbalken (104) relativ zum Benutzer stationär bleibt.

27. Verfahren nach Anspruch 25, wobei sich der Titelbalken (102) mit der Tischfläche dreht.

28. Verfahren nach Anspruch 18, wobei in dem Fall, dass die Fenster auf der Tischfläche einander überlagert sind, an der Tischfläche unbefestigte Fenster (170) dem Benutzer über an der Tischfläche befestigten Fenstern (210) schwebend erscheinen.

29. Verfahren nach Anspruch 28, wobei die Drehung horizontal ist.

30. Verfahren nach Anspruch 19, wobei die Tischfläche einen auf dem Anzeigeschirm angezeigten und von der Cursorsteuerungseinrichtung gesteuerten Cursor (136) in Form eines Pfeils mit einen Körper und zwei entgegengesetzte Pfeilspitzen aufweist, wobei in Bezug auf einen die Anzeige betrachtenden Benutzer eine (165) der Pfeilspitzen nach links und eine Pfeilspitze (168) nach rechts zeigt, und wobei die Pfeilspitzen mit den Drehrichtungen der Tischfläche korrespondieren.

31. Verfahren nach Anspruch 30, wobei die Cursorsteuerungseinrichtung (52) wenigstens zwei an die CPU gekoppelte Schalter (54, 56) aufweist, die mit den Drehrichtungen korrespondieren.

32. Verfahren nach Anspruch 31, wobei bei einem Setzen des Cursors durch den die Cursorsteuerungseinrichtung verwendenden Benutzer auf eines der auf der Tischfläche angezeigte Fenster die CPU die Form des Cursors modifiziert.

33. Verfahren nach Anspruch 32, wobei der modifizierte Cursor die Form eines Efeus mit nur einer einzigen Pfeilspitze aufweist.

## Revendications

1. Système d'affichage d'ordinateur incluant une unité centrale de traitement (CPU) (24) couplée à un affichage (50) comportant un écran d'affichage (60) de telle sorte que des données soient affichées sur ledit écran d'affichage dans une pluralité de fenêtres, comprenant:
un moyen de génération d'interface utilisateur couplé à ladite CPU pour afficher lesdites données dans lesdites fenêtres, ledit moyen de génération d'interface utilisateur générant et affichant une interface utilisateur incluant un bureau comportant une partie visible (100) et une partie virtuelle (140, 145), dans lequel ladite partie visible (100) correspond à la partie dudit bureau présentement visible sur ledit écran d'affichage (60), ladite partie virtuelle correspond à la partie dudit bureau présentement non visible pour ledit utilisateur sur ledit écran d'affichage ;
un moyen de panoramique (52, 30) couplé à ladite CPU pour réaliser de façon sélective un panoramique dudit bureau suivant au moins deux directions de telle sorte que ledit bureau réalise un panoramique suivant une direction choisie par l'utilisateur et que la partie dudit bureau dans ladite partie visible soit affichée pour ledit utilisateur, caractérisé en ce que lesdites fenêtres affichées sur ledit bureau incluent un moyen de fixation (200) pour fixer de façon sélective au moins l'une desdites fenêtres (170) audit bureau de telle sorte que si une fenêtre (170) est fixée audit bureau, ladite fenêtre (170) se déplace avec ledit bureau suivant la direction selon laquelle ledit bureau réalise un panoramique et reste stationnaire par rapport audit bureau.

2. Système d'affichage d'ordinateur selon la revendication 1, dans lequel, dans l'éventualité où ladite fenêtre (170) n'est pas fixée audit bureau, ladite fenêtre reste stationnaire par rapport audit utilisateur de telle sorte que ladite fenêtre non fixée apparaît audit utilisateur comme flottant au-dessus dudit bureau lorsque ledit bureau réalise un panoramique.

3. Système d'affichage d'ordinateur selon la revendication 2, dans lequel ledit moyen de panoramique inclut un dispositif de commande de curseur (52) couplé à ladite CPU et activable par ledit utilisateur.

4. Système d'affichage d'ordinateur selon la revendication 2 ou 3, dans lequel ledit moyen de fixation (200) inclut un bouton d'activation de fenêtre flottante dans chacune desdites fenêtres (170) affichées sur ledit affichage présentant deux états, un premier état correspondant à un état fixé et un second état correspondant audit état non fixé.

5. Système d'affichage d'ordinateur selon la revendication 4, dans lequel ledit bouton d'activation (200) affiche la notation DN si ladite fonction a été placée dans ledit état fixé.

6. Système d'affichage d'ordinateur selon la revendication 5, dans lequel ledit bouton d'activation (200) affiche la notation UP si ladite fonction a été placée dans ledit état non fixé.

7. Système d'affichage d'ordinateur selon l'une quelconque des revendications 2 à 4, incluant en outre une barre de fonctions (104) sur ledit écran d'affichage sur laquelle sont affichées une pluralité de fonctions sélectionnables par ledit utilisateur.

8. Système d'affichage d'ordinateur selon la revendication 7, dans lequel ladite barre de fonctions (104) est disposée horizontalement le long de la partie inférieure dudit écran d'affichage.

9. Système d'affichage d'ordinateur selon la revendication 8, incluant en outre une barre de titres (102) disposée horizontalement au sommet dudit écran d'affichage.

10. Système d'affichage d'ordinateur selon la revendication 9, dans lequel ladite barre de fonctions (104) reste stationnaire par rapport audit utilisateur.

11. Système d'affichage d'ordinateur selon la revendication 9, dans lequel ladite barre de titres réalise un panoramique avec ledit bureau.

12. Système d'affichage d'ordinateur selon l'une quelconque des revendications 2 à 11, dans lequel, dans l'éventualité où lesdites fenêtres se chevauchent les unes les autres sur ledit bureau, des fenêtres (170) non fixées audit bureau apparaissent audit utilisateur comme flottant au-dessus de fenêtres (210) qui sont fixées audit bureau.

13. Système d'affichage d'ordinateur selon la revendication 12, dans lequel ledit panoramique est horizontal.

14. Système d'affichage d'ordinateur selon la revendication 3, dans lequel ledit bureau inclut en outre un curseur (136) affiché sur ledit écran d'affichage et commandé par ledit dispositif de commande de curseur (52), ledit curseur présentant la forme d'une flèche incluant un corps et deux têtes de flèche opposées, l'une (165) desdites têtes de flèche pointant vers la gauche et l'autre tête de flèche (168) pointant vers la droite par rapport audit utilisateur qui visualise ledit affichage, lesdites têtes de flèche correspondant à des directions de panoramique dudit bureau.

15. Système d'affichage d'ordinateur selon la revendication 14, dans lequel ledit dispositif de commande de curseur inclut au moins deux commutateurs (54, 56) couplés à ladite CPU, lesdits commutateurs correspondant auxdites directions de panoramique.

16. Système d'affichage d'ordinateur selon la revendication 15, dans lequel, si ledit curseur est placé par ledit utilisateur qui utilise ledit dispositif de commande de curseur au-dessus de l'une desdites fenêtres affichées sur ledit bureau, ladite CPU modifie la forme dudit curseur.

17. Système d'affichage d'ordinateur selon la revendication 16, dans lequel ledit curseur modifié présente la forme d'une flèche comportant seulement une unique tête de flèche.

18. Procédé permettant d'augmenter l'espace de travail utilisable pour un utilisateur dans un système d'affichage d'ordinateur incluant une unité centrale de traitement (CPU) (24) couplée à un affichage (50) comportant un écran d'affichage (60) de telle sorte que des données soient affichées sur ledit écran d'affichage dans une pluralité de fenêtres, comprenant les étapes de:
génération et affichage d'une interface utilisateur incluant un bureau comportant une partie visible (100) et une partie virtuelle (150, 145), dans lequel ladite partie visible (100) correspond à la partie dudit bureau présentement visible sur ledit écran d'affichage et ladite partie virtuelle (140, 145) correspond à la partie dudit bureau présentement non visible pour ledit utilisateur sur ledit écran d'affichage;
soumission dudit bureau à un panoramique suivant au moins deux directions de telle sorte que ledit bureau réalise un panoramique suivant une direction sélectionnée par un utilisateur et que la partie dudit bureau dans ladite partie visible soit affichée pour ledit utilisateur; et
fixation de façon sélective d'au moins l'une (170) desdites fenêtres audit bureau de telle sorte que si une fenêtre est fixée audit bureau, ladite fenêtre (170) se déplace avec ledit bureau suivant la direction selon laquelle ledit bureau est soumis à un panoramique et reste stationnaire par rapport audit bureau, caractérisé en ce que, dans l'éventualité où ladite fenêtre (170) n'est pas fixée audit bureau, ladite fenêtre reste stationnaire par rapport audit utilisateur de telle sorte que ladite fenêtre non fixée apparaît audit utilisateur comme flottant au-dessus
dudit bureau lorsque ledit bureau est soumis à un panoramique.

19. Procédé selon la revendication 18, dans lequel ledit utilisateur utilise un dispositif de commande de curseur (52) couplé à ladite CPU et actionnable par ledit utilisateur pour soumettre à un panoramique ledit bureau.

20. Procédé selon la revendication 18, dans lequel chacune desdites fenêtres inclut un bouton d'activation de fenêtre flottante comportant deux états, un premier état correspondant à un état fixé et un second état correspondant audit état non fixé.

21. Procédé selon la revendication 20, dans lequel ledit bouton d'activation affiche la notation DN si ladite fonction a été placée dans ledit état fixé.

22. Procédé selon la revendication 20, dans lequel ledit bouton d'activation affiche la notation UP si ladite fonction a été placée dans ledit état non fixé.

23. Procédé selon la revendication 18, incluant en outre une barre de fonctions (104) sur ledit écran d'affichage d'ordinateur sur laquelle sont affichées une pluralité de fonctions sélectionnables par ledit utilisateur.

24. Procédé selon la revendication 23, dans lequel ladite barre de fonctions (104) est disposée horizontalement le long de la partie inférieure dudit écran d'affichage.

25. Procédé selon la revendication 24, incluant en outre une barre de titres (102) disposée horizontalement sur le sommet dudit écran d'affichage d'ordinateur.

26. Procédé selon la revendication 25, dans lequel ladite barre de fonctions (104) reste stationnaire par rapport audit utilisateur.

27. Procédé selon la revendication 25, dans lequel ladite barre de titres réalise un panoramique avec ledit bureau.

28. Procédé selon la revendication 18, dans lequel, dans l'éventualité où lesdites fenêtres se chevauchent les unes les autres sur ledit bureau, des fenêtres (107) non fixées audit bureau apparaissent audit utilisateur comme flottant au-dessus de fenêtres (200) qui sont fixées audit bureau.

29. Procédé selon la revendication 28, dans lequel ledit panoramique est horizontal.

30. Procédé selon la revendication 19, dans lequel ledit bureau inclut en outre un curseur (136) affiché sur ledit écran d'affichage et commandé par ledit dispositif de commande de curseur, ledit curseur présentant la forme d'une flèche incluant un corps et deux têtes de flèche opposées, l'une (165) desdites têtes de flèche pointant vers la gauche et l'autre tête de flèche (168) pointant vers la droite par rapport audit utilisateur qui visualise ledit affichage, lesdites têtes de flèche correspondant à des directions de panoramique dudit bureau.

31. Procédé selon la revendication 30, dans lequel ledit dispositif de commande de curseur inclut au moins deux commutateurs (54, 56) couplés à ladite CPU, lesdits commutateurs correspondant auxdites directions de panoramique.

32. Procédé selon la revendication 31, dans lequel, si ledit curseur est placé par ledit utilisateur qui utilise ledit dispositif de commande de curseur au-dessus de l'une desdites fenêtres affichées sur ledit bureau, ladite CPU modifie la forme dudit curseur.

33. Procédé selon la revendication 32, dans lequel ledit curseur modifié présente la forme d'une flèche comportant seulement une unique tête de flèche.
